# EUROPÄISCHE PATENTSCHRIFT

(11) **EP 0 825 054 B1**
(45) Veröffentlichungstag und Bekanntmachung des Hinweises auf die Patenterteilung: **17.02.1999**
(21) Anmeldenummer: 97113547.0
(22) Anmeldetag: 06.08.1997
(51) Int. Cl.: B60K 11/08, F41H 7/03

(54) **Gräting für Sonderfahrzeuge, wie gepanzerte Fahrzeuge, mit einem Rahmen und Profilleisten**
Grating for armoured vehicles comprising a frame and profiles
Volet de protection pour véhicules blindés, comprenant un cadre et des profilés

(30) Priorität: 23.08.1996 DE 19634227
(43) Veröffentlichungstag der Anmeldung: 25.02.1998
(73) Patentinhaber: Thyssen Krupp Stahl AG, 40211 Düsseldorf (DE)
(72) Erfinder: Dieterich, Günter, 44289 Dortmund (DE); Piel, Karlheinz, Dipl.-Ing., 58239 Schwerte (DE); Schulte, Hans-Werner, 58239 Schwerte (DE); Schulz, Michael, 58239 Schwerte (DE)

(56) Entgegenhaltungen:
- DE-B- 1 184 675

## Beschreibung

Die Erfindung betrifft eine Gräting nach dem Oberbegriff des Anspruches 1.

Sonderfahrzeuge, wie gepanzerte Fahrzeuge, die im sogenannten off-road-Betrieb eingesetzt sind, haben den Motorenraum einschließlich Kühlsystem abgekapselt, um so einen Ausfall des Fahrzeuges durch Beschädigung dieser Teile des Antriebssystems durch Eindringen von Fremdkörpern zu vermeiden. Die Versorgung des Motors mit Verbrennungsluft und mit Kühlluft wird dabei üblicherweise über Grätings sichergestellt. Im üblichen haben diese Motorenräume zur Be- und Entlüftung zwei dieser Grätings, wobei im Bereich der Einlaßgrätinge ein Ventilator die benötigten Luftmengen ansaugt und im Bereich der Auslaßgrätinge ein freies Ausströmen der verbrauchten Luft möglich ist.

Die Anforderungen, die somit an entsprechende Grätings gestellt werden, sind eine hinreichend große Öffnung des Gesamtsystems für den erforderlichen Luftdurchsatz und die Ausbildung der Luftkanäle dergestalt, daß ein Eindringen von Fremdkörpern verhindert werden kann.

Bei den z.B. aus der DE-OS 37 03 716 bekannten Grätings sind die aus Stahl bestehenden parallel zueinander angeordneten Profilleisten üblicherweise in einem Rahmen angeordnet, wobei die einzelnen Profilleisten mit ihren Stirnseiten auf den den Stirnseiten zugeordneten Rahmenteilen angeschweißt sind. Diese Schweißbereiche liegen somit im Auftreffbereich und Bereich der Schlagwirkung von Fremdkörpern.

Die durch das Schweißen entstehenden Wärmeeinflußzonen führt in diesen Verbindungsbereichen Profilleisten/Rahmenteile zu einer Verschlechterung des ballistischen Schutzes gegenüber dem Grundmaterial. Außerdem ist darüber hinaus bei dieser Art der Verbindung eine komplette Schweißverbindung der Rahmenteile mit den Profilleisten nicht möglich.

Von daher ist in der gattungsgemäßen DE 4028124 A1 vorgeschlagen worden, die Enden der Profilleisten jeweils in den den Profilleisten konturgerechten Löchern in den Rahmenteilen anzuordnen und diese auf der den Profilleisten abgewandten Seite der Rahmenteile mit diesen lösbar oder unlösbar zu verbinden. Nach einem speziellen, gattungsgemäßen Ausführungsbeispiel sind die Profilleisten in den konturgerechten Löchern in den Rahmenteilen angeordnet und auf der den Profilleisten abgewandten Seite der Rahmenteile ist jeweils eine Sicherungsplatte vorgesehen, um ein Verschieben der Profilleisten zu verhindern.

Diese letztgenannte, lösbare Verbindung weist den Nachteil auf, daß schon bei geringen Fertigungstoleranzen eine feste Lage der Profilleisten im Rahmen nicht gegeben ist.

Neuerdings werden, wie z.B. aus der EP 0732234 A2 (Stand der Technik nach Art. 54(3) EPÜ) bekannt ist, Profilleisten für Grätings vorgesehen, die jeweils aus einer Materialkombination von metallischem Kern und einer Ummantelung aus nichtmetallischem Material, wie z.B. Aramid, glasfaserverstärktem Kunststoff oder dergleichen bestehen.

Der Erfindung liegt die Aufgabe zugrunde, eine gattungsgemäße Gräting so zu verbessern, daß bei Grätings mit Profilleisten aus einem metallischen Kern und einer nichtmetallischen Ummantelung auf einfache Weise die Profilleisten im Rahmen sicher festgelegt sind.

Nach der Erfindung wird die Aufgabe bei einer gattungsgemäßen Gräting durch die im kennzeichnenden Teil des Anspruchs 1 angegebenen Merkmale gelöst.

Zweckmäßige und vorteilhafte Ausgestaltungen sind in den Ansprüchen 2 bis 7 angegeben.

Die Vorteile der erfindungsgemäßen Gräting sind insbesondere darin zu sehen, daß Profilleisten mit metallischem Kern und einer nichtmetallischen Ummantelung mit den seitlichen Rahmenteilen einer Gräting auf einfache Weise verbunden werden können, ohne daß die Enden der Profilleisten selbst zur Anpassung bearbeitet werden müssen.

Anhand der schematischen Zeichnung sind Ausführungsbeispiele der Gräting nach der Erfindung im folgenden näher beschrieben.

Es zeigt
- Fig. 1: eine Profilleiste im Schnitt,
- Fig. 2: einen Rahmenteil in Seitenansicht mit Schnitt durch die eingesetzten Profilleisten,
- Fig. 3: eine Ausführungsform einer Sicherungsplatte in Seitenansicht,
- Fig. 4: eine Ausführungsform der Gräting in Ansicht,
- Fig. 5: einen Teilschnitt "X" aus Fig. 4,
- Fig. 6: eine andere Ausführungsform der Sicherungsplatte in Seitenansicht,
- Fig. 7: eine weitere Ausführungsform der Sicherungsplatte in Seitenansicht,
- Fig. 8: eine Ausführungsform der Gräting mit einer Sicherungsplatte nach Fig. 7 in Ansicht,
- Fig. 9: einen Teilschnitt "X" aus Fig. 8.

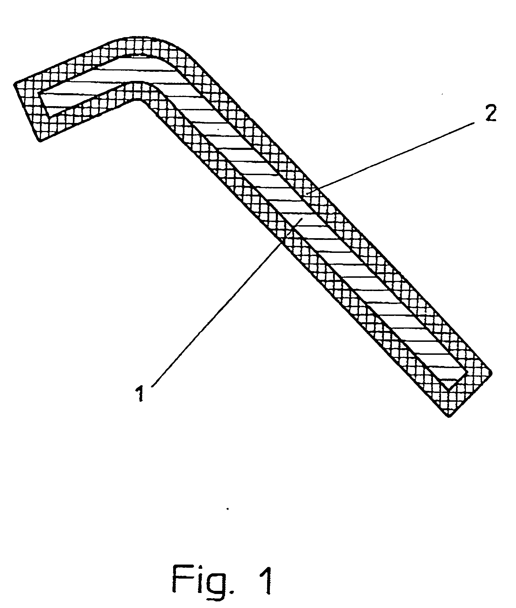

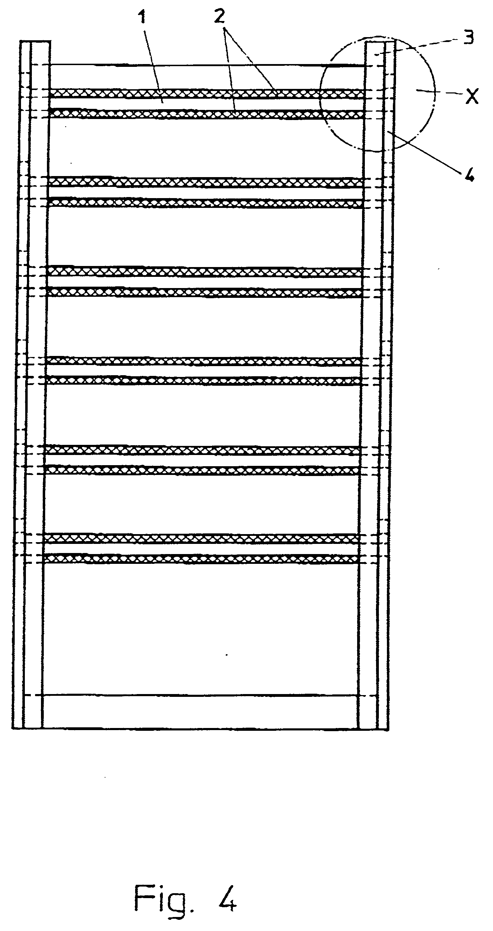

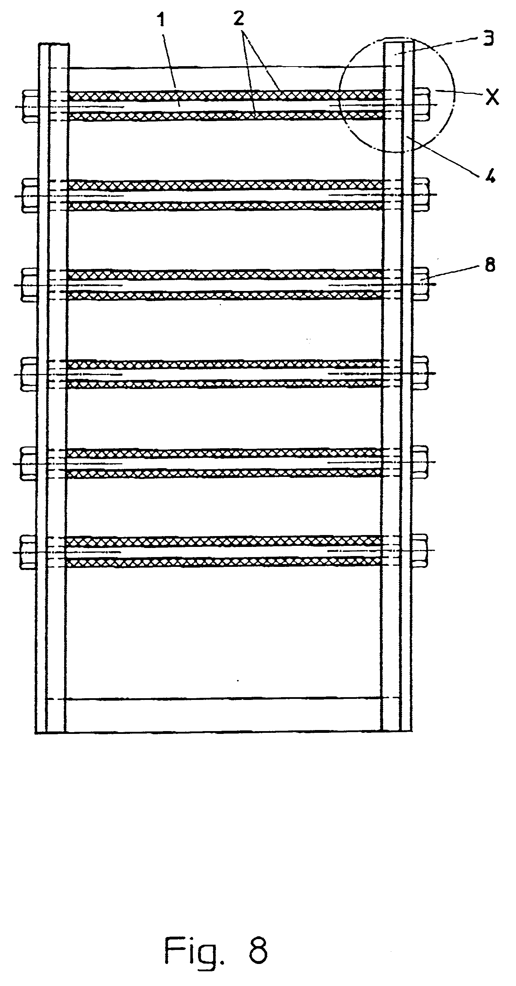

Wie den Fig. 1 bis 9 zu entnehmen ist, besteht eine Profilleiste für Grätinge aus einem Kern 1 aus Stahl und einer nichtmetallischen Ummantelung 2. Diese Profilleisten sind mit einem Rahmenteil 3 der Gräting über eine Sicherungsplatte 4 verbunden, die auf der der Profilleisten abgewandten Seite jeweils des Rahmenteils 3 im damit verbundenen Zustand angeordnet ist (Fig. 4, 5, 8, 9).

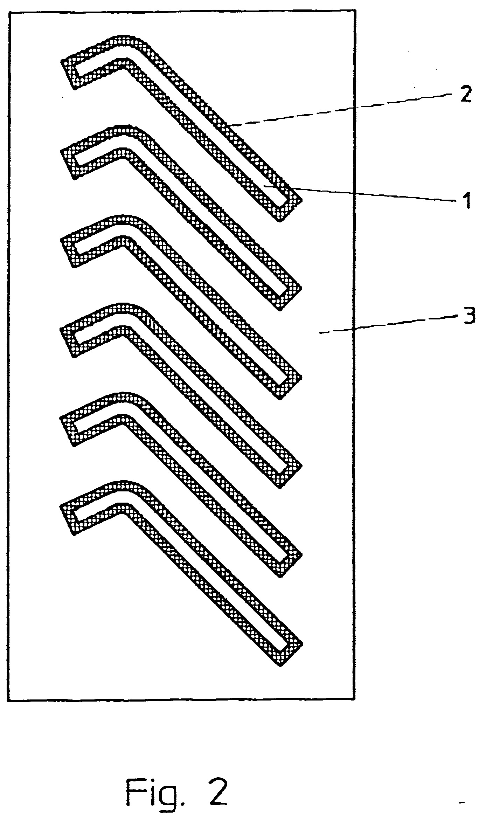

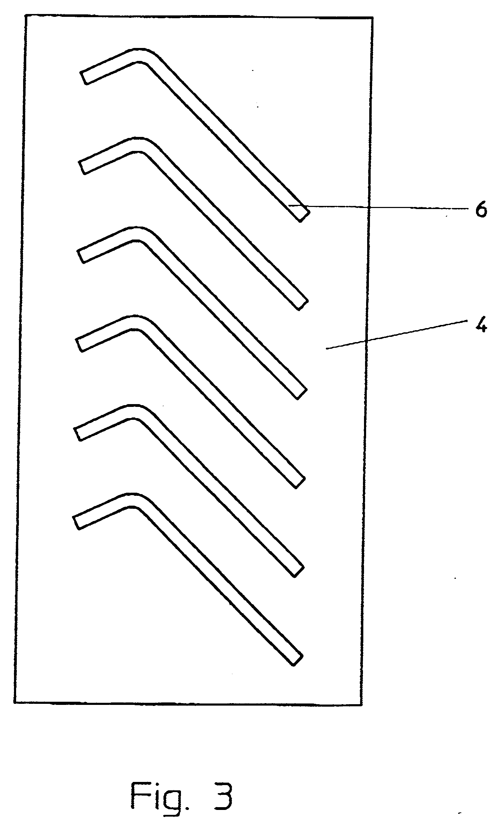

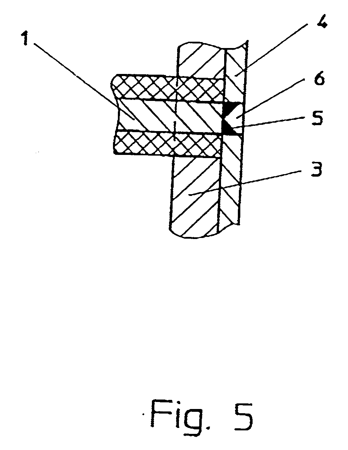

Die Fig. 2 zeigt, daß die Profilleisfen, bestehend aus Kern 1 und Ummantelung 2, in konturgerechten Löchern im Rahmenteil 3 eingesetzt sind, wobei die Sicherungsplatte nach Fig. 3 Löcher 6 aufweist, die im wesentlichen der kompletten Kontur des Kerns 1 der Profilleisten nach den Fig. 1 und 2 entsprechen.

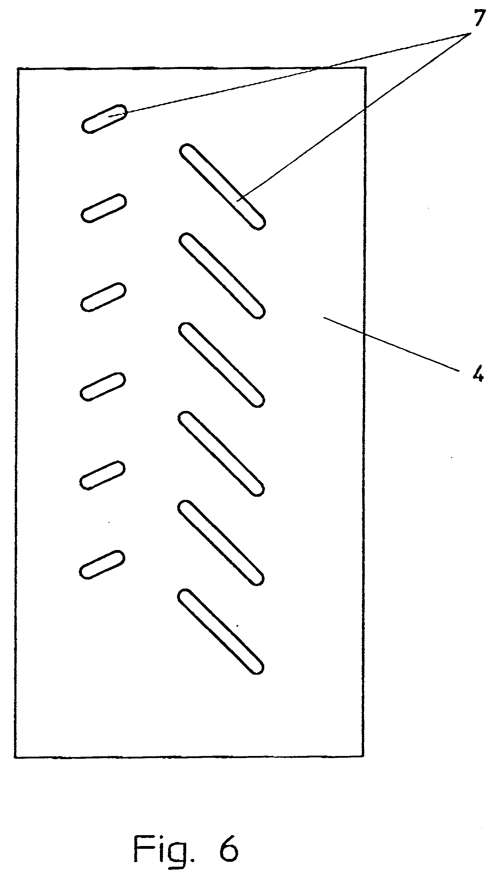

In den Fig. 4 und 5 ist eine Ausführung einer Gräting dargestellt, wobei die Profilleisten gem. Fig. 1 und 2 mit den Rahmenteilen 3 über die Sicherungsplatte 4 mit Löchern 6 entsprechend Fig. 3 unlösbar verbunden ist, indem der Kern 1 der Profilleiste mit der Sicherungsplatte 4 in den Löchern 6 mittels einer Schweißnaht 5 verbunden ist.

Die gleiche unlösbare Verbindung ist möglich mittels der in Fig. 6 dargestellten Sicherungsplatte 4 mit jeweils zwei Langlöchern 7 für einen dort nicht dargestellten Kern 1, die eine partielle Schweißverbindung erlaubt.

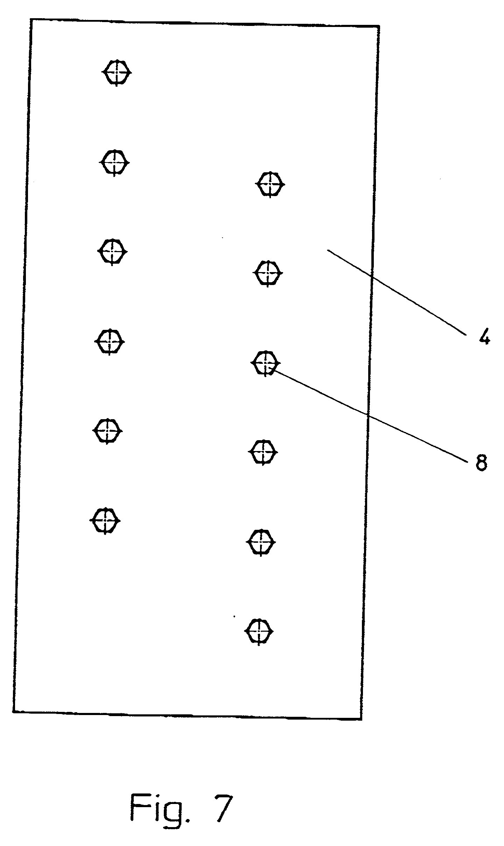

In den Fig. 7 bis 9 ist eine Sicherungsplatte 4 mit runden Durchgangslöchern für Schrauben 8 dargestellt, die eine lösbare Verbindung der Profilleisten mit den Rahmenteilen 3 der Grätinge über die Sicherungsplatte 4 gestattet, indem die Schrauben 8 in Gewindesacklöchern 9 im Kern 1 eingeschraubt werden.

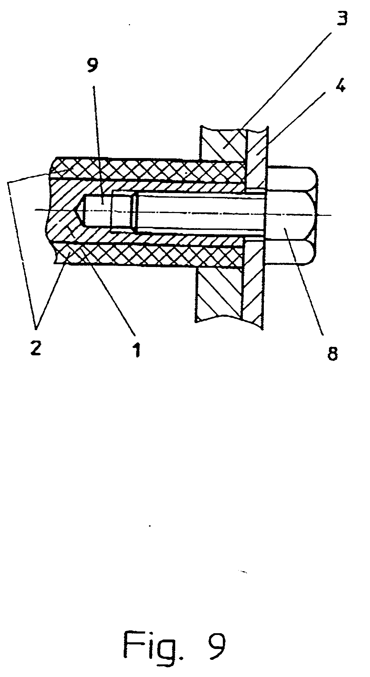

Die Sicherungsplatte 4 nach Fig. 6 erlaubt ebenfalls eine lösbare Verbindung von Profilleisten mit einem Rahmenteil 3 einer Gräting mittels der durch die Langlöcher 7 geführte Schrauben 8, die entsprechend Fig. 9 in Gewindesacklöchern 9 im Kern 1 eingeschraubt sind.

Bei allen Ausführungen kann die Sicherungsplatte 4 selbst am Rahmenteil 3 z.B. zusätzlich angeschweißt sein bzw. werden. Allerdings ist dies nicht erforderlich, da die Sicherungsplatte 4 allein durch das Verbinden jeweils mit dem Kern 1 der Profilleiste am Rahmenteil 3 festgelegt ist.

Der Kern kann auch jeweils über eine Keilverbindung mit der Sicherungsplatte 4 verbunden sein, wobei der Keil jeweils durch entsprechende Löcher 6 in der Sicherungsplatte in Sacklöcher im Kern eingeschlagen ist.

## Patentansprüche

1. Gräting für Sonderfahrzeuge, wie gepanzerte Fahrzeuge, mit einem Rahmen und Profilleisten, wobei die Enden der parallel zueinander angeordneten Profilleisten jeweils in konturgerechten Löchern der Rahmenteile (3) angeordnet sind und auf der den Profilleisten abgewandten Seite der Rahmenteile jeweils eine Sicherungsplatte (4) vorgesehen ist, um ein Verschieben der Profilleisten in den Rahmenteilen zu verhindern, **dadurch gekennzeichnet,** daß die Profilleisten mit metallischem Kern (1) und nichtmetallischer Ummantelung (2) ausgeführt sind und der Kern (1) oder ein Teil des Kerns (1) mit der auf der den Profilleisten abgewandten Seite des Rahmenteils (3) angeordneten Sicherungsplatte (4) lösbar oder unlösbar verbunden ist, wobei die Sicherungsplatte (4) jeweils Löcher (6) aufweist, durch die der metallische Kern (1) jeder Profilleiste zum Anbringen von Verbindungsmitteln (5, 8) zugänglich ist.

2. Gräting nach Anspruch 1, **dadurch gekennzeichnet,** daß die Löcher (6) der Sicherungsplatte jeweils Langlöcher (7) sind, über die der Kern (1) jeweils mit der Sicherungsplatte (4) verbunden ist.

3. Gräting nach Anspruch 1 oder 2, **dadurch gekennzeichnet,** daß die Sicherungsplatte (4) für jeden Kern (1) jeweils zwei oder mehr Löcher (6) aufweist.

4. Gräting nach Anspruch 1, **dadurch gekennzeichnet,** daß die Löcher (6) der Sicherungsplatte jeweils im wesentlichen dem Querschnittsprofil des Kerns (1) entsprechen.

5. Gräting nach einem der Ansprüche 1 bis 4, **dadurch gekennzeichnet,** daß jeweils der Kern (1) mit der Sicherungsplatte (4) in den Löchern (6) der Sicheringsplatte unlösbar verschweißt ist.

6. Gräting nach einem der Ansprüche 1 bis 4, **dadurch gekennzeichnet,** daß jeweils der Kern (1) mit der Sicherungsplatte (4) lösbar verschraubt ist, wobei die Sicherungsplatte (4) den Schrauben (8) entsprechende Durchgangslöcher und der Kern (1) entsprechende Gewindesacklöcher (9) aufweisen.

7. Gräting nach einem der Ansprüche 1 bis 4, **dadurch gekennzeichnet,** daß der Kern (1) jeweils über eine Keilverbindung mit der Sicherungsplatte (4) verbunden ist, wobei der Keil jeweils durch entsprechende Löcher (6) in der Sicherungsplatte (4) in Sacklöcher im Kern (1) eingeschlagen ist.

## Claims

1. Grating for special purpose vehicles, such as armoured vehicles, having a frame and profiled strips, wherein the ends of the mutually parallel profiled strips are disposed in each case in appropriately shaped holes of the frame parts (3) and in each case a securing plate (4) is provided on the side of the frame parts remote from the profiled strips, in order to prevent a displacement of the profiled strips in the frame parts, characterised in that the profiled strips are formed with a metallic core (1) and a non-metallic casing (2), and the core (1) or a part of the core (1) is releasably or non-releasably connected to the securing plate (4) disposed on the side of the frame part (3) remote from the profiled strips, wherein the securing plate (4) comprises in each case holes (6), through which it is possible to access the metallic core (1) of each profiled strip for the purpose of attaching connection means (5, 8).

2. Grating according to claim 1, characterised in that the holes (6) in the securing plate are in each case elongated holes (7) by means of which the core (1) is connected in each case to the securing plate (4).

3. Grating according to claim 1 or 2, characterised in that the securing plate (4) comprises for each core (1) in each case two or more holes (6).

4. Grating according to claim 1, characterised in that the holes (6) in the securing plate correspond in each case substantially to the cross-sectional profile of the core (1).

5. Grating according to one of claims 1 to 4, characterised in that in each case the core (1) is non-releasably welded to the securing plate (4) in the holes (6) of the securing plate.

6. Grating according to any one of claims 1 to 4, characterised in that in each case the core (1) is releasably screwed to the securing plate (4), wherein the securing plate (4) comprises through-going holes which correspond to the screws (8) and the core (1) comprises corresponding threaded blind holes (9).

7. Grating according to any one of claims 1 to 4, characterised in that the core (1) is connected in each case by way of a wedge connection to the securing plate (4), wherein the wedge is driven into blind holes in the core (1) in each case through corresponding holes (6) in the securing plate (4).

## Revendications

1. Grille pour véhicules spéciaux tels que des véhicules blindés, avec un cadre et des languettes profilées, dans laquelle les extrémités des languettes profilées disposées parallèlement les uns aux autres sont chacune disposées dans des cavités de contours appropriés des parties de cadre (3), et une plaque de fixation (4) est chaque fois prévue du côté des parties de cadre qui n'est pas tourné vers les languettes profilées, pour empêcher un glissement des languettes profilées dans les parties de cadre, caractérisée en ce que les languettes profilées sont réalisées avec une âme métallique (1) et une enveloppe non-métallique (2), l'âme (1) ou une partie de l'âme (1) est reliée de manière libérable ou non-libérable à la plaque de fixation (4) disposée du côté de la partie de cadre (3) qui n'est pas tourné vers les languettes profilées, chaque plaque de fixation (4) présentant des cavités (6) par lesquelles l'âme métallique (1) de chaque languette profilée est accessible pour l'installation de moyens de liaison (5, 8).

2. Grille selon la revendication 1, caractérisée en ce que les cavités (6) de la plaque de fixation sont chacune des cavités allongées (7) par lesquelles l'âme (1) est chaque fois reliée à la plaque de fixation (4).

3. Grille selon la revendication 1 ou 2, caractérisée en ce que chaque plaque de fixation (4) présente deux ou plusieurs cavités (6) pour chaque âme (1).

4. Grille selon la revendication 1, caractérisée en ce que les cavités (6) de la plaque de fixation correspondent chacune essentiellement au profil de la section transversale de l'âme (1).

5. Grille selon l'une des revendications 1 à 4, caractérisée en ce que chaque âme (1) est soudée de manière non libérable à la plaque de fixation (4) dans les cavités (6) de la plaque de fixation.

6. Grille selon l'une des revendications 1 à 4, caractérisée en ce que chaque âme (1) est vissée de manière libérable à la plaque de fixation (4), la plaque de fixation (4) étant traversée par des cavités correspondant aux vis (8), et l'âme (1) présentant des cavités borgnes filetées (9) correspondantes.

7. Grille selon l'une des revendications 1 à 4, caractérisée en ce que chaque âme (1) est reliée à la plaque de fixation (4) par une liaison à clavette, chaque clavette étant enfoncée dans des cavités borgnes de l'âme (1), en passant par des cavités (6) correspondantes prévues dans la plaque de fixation (4).
